# EUROPÄISCHE PATENTSCHRIFT

(11) **EP 1 632 392 B1**
(45) Veröffentlichungstag und Bekanntmachung des Hinweises auf die Patenterteilung: **17.10.2007**
(21) Anmeldenummer: 05016920.0
(22) Anmeldetag: 04.08.2005
(51) Int. Cl.: B60Q 1/30, B60Q 1/26, B60R 16/02

(54) **Heckleuchtenanordnung**
Rear light assembly
Ensemble de feux arrière

(30) Priorität: 07.09.2004 DE 102004043083
(43) Veröffentlichungstag der Anmeldung: 08.03.2006
(73) Patentinhaber: KOMPLED GmbH & Co. KG, 89081 Ulm (DE)
(72) Erfinder: Koch, Josef, 89081 Ulm (DE)
(74) Vertreter: Weber, Gerhard

(56) Entgegenhaltungen:
- EP-A- 0 689 961
- DE-A1- 1 950 886
- DE-A1- 10 159 064
- US-A- 5 025 350
- US-A1- 2004 156 205

## Beschreibung

Die Erfindung betrifft eine Heckleuchtenanordnung für ein Lastfahrzeug, insbesondere Anhänger.

Gebräuchliche Ausführungen für Heckleuchtenanordnungen für Lastfahrzeuge weisen eine heckseitige Quertraverse aus einem mehrfach abgekanteten Stahlblech auf, welche in einer nach hinten offenen Vertiefung geschützt verschiedene Leuchtengehäuse aufnimmt. Für den elektrischen Anschluss der einzelnen Leuchtengehäuse, welche auch Leuchten zu mehreren verschiedenen Beleuchtungsfunktionen enthalten können, sind mehradrige Anschlusskabel von den einzelnen Leuchten zu einem heckseitigen Verteiler geführt. Zur Befestigung der Leuchtengehäuse können bereits bei der Herstellung der Quertraverse Öffnungen für Befestigungselemente und Anschlusskabel vorbereitet werden, was aber ein Mindestmaß an Standardisierung der Leuchtengehäuse und Leuchtenanordnungen erfordert.

Aus der EP 0 764 560 B1 und der DE 19 50 886 A1 sind Heckleuchtenanordnungen mit teleskopierbaren Trägerschienen für Leuchtengruppen bekannt, wodurch eine Anpassung an unterschiedliche Fahrzeugbreiten und/oder ein kompaktes Maß für die Aufbewahrung erreicht wird. In der DE 20 2004 008 372 U1 ist eine Montageschiene als Ersatz für durch einen Heckträger verdeckten Originalleuchten eines Fahrzeugs beschrieben, bei welchen Leuchtengruppen entlang der Montageschiene in verschiedenen Positionen befestigbar und über nicht näher beschriebene Leiterbahnen kontaktierbar sind. Bei einer aus der US 5 264 997 bekannten Leuchtenanordnung sind gekapselte Leuchtengehäuse über gleichfalls gekapselte Adapter induktiv mit elektrischer Leistung versorgt.

Der vorliegenden Erfindung liegt die Aufgabe zugrunde, eine Heckleuchtenanordnung anzugeben, welche variabel und montagefreundlich ist.

Die Erfindung ist im Anspruch 1 beschrieben. Die abhängigen Ansprüche enthalten vorteilhafte Ausgestaltungen und Weiterbildungen der Erfindung.

Der Einsatz eines mehradrigen Flachkabels, welches parallel zur Längsrichtung eines horizontal quer zur Fahrtrichtung erstreckenden Trägers verläuft und an welches Leuchtengehäuse mittels die Kabelisolierung durchdringender und einzelne Kabeladern kontaktierender Kontaktanordnungen anschließbar sind, erlaubt vorteilhafterweise die Anordnung von Leuchtengehäusen in an sich beliebiger Position in Längsrichtung ohne individuelle Verkabelung. Das Flachkabel bzw. dessen Adern werden hierbei an den Kontaktstellen nicht unterbrochen. Die Kontaktierung von Adern eines Flachkabels mittels Kontaktanordnungen mit z. B. Schneidklemmen oder Kontaktspitzen unter Durchdringung der Kabelisolierung ist an sich bekannt und gebräuchlich. Das Flachkabel kann die mehreren Adern auch in zwei Ebenen aufweisen, welche von entgegen gesetzten Seiten des Flachkabels her kontaktiert sind. Die Verbindung von Leuchtengehäusen mit Flachkabeln über Spitzenkontakte ist an sich bekannt, beispielsweise bei einigen Ausführungen von Lichterketten oder bei einer aus der EP 0 689 961 A2 bekannten Anordnung mehrerer Seitenmarkierungsleuchten an einem Lastkraftfahrzeug.

Das Flachkabel enthält Kabeladern zur Versorgung von Leuchten mehrerer unterschiedlicher Beleuchtungsfunktionen, vorzugsweise aller Beleuchtungsfunktionen der Heckleuchtenanordnungen, wozu insbesondere die Beleuchtungsfunktionen Rücklicht, Bremslicht, Kennzeichenbeleuchtung, Blinker rechts und Blinker Links gehtiren. Standardmäßig enthalten Heckleuchtenanordnungen auch Rückfahrscheinwerfer und Nebelschlussleuchte. Typischerweise sind alle Leuchtenstromkreise an einem gemeinsamen Bezugspotential (Masse) betrieben, so dass im Flachkabel für alle Leuchtenstromkreise eine gemeinsame Masseader vorgesehen sein kann. Zum Betrieb aller unabhängigen genannten Leuchtenfunktionen an einem gemeinsamen Flachkabel weist dieses vorteilhafterweise neben einer gemeinsamen Masseader wenigstens sechs getrennte Funktionsadern für die unabhängigen Beleuchtungsfunktionen auf. Die Kennzeichenbeleuchtung ist typischerweise gleichzeitig mit den Rücklichtern eingeschaltet und kann daher deren Funktionsader mit verwenden. Bei zwei getrennten Teilleuchtenanordnungen mit eigenen Flachkabeln auf der linken und der rechten Fahrzeugseite sowie Rückfahrscheinwerfer und Nebelschlussleuchte jeweils nur in einer der Teilleuchtenanordnungen kann die Anzahl der Kabeladern auf fünf, bei Wegfall einzelner Beleuchtungsfunktionen auch auf weniger reduziert sein. Andererseits kann in vorteilhafter Ausführung vorgesehen sein, auch bei gegenüber dem vollen Beleuchtungsfunktionsumfang reduzierten Beleuchtungsfunktionen, z. B. in den genannten Teilleuchtenanordnungen, dennoch Flachkabel mit dem vollen Adernsatz für alle Beleuchtungsfunktionen vorzusehen, wodurch bei allen Anordnungen immer einheitliche Kabelquerschnitte und einheitliche Kontaktanordnungen zum Einsatz kommen können.

Die Kontaktanordnungen können so ausgebildet sein, dass immer alle Adern des Flachkabels kontaktiert, dann aber nur die für die jeweilige Beleuchtungsfunktion oder Beleuchtungsfunktionen eines zugeordneten Gehäuses maßgeblichen Kontakte in der Leuchte ausgenutzt werden. In anderer Ausführung sind die Kontaktvorrichtungen bereits in der Art auf die Beleuchtungsfunktion(en) des zugeordneten Gehäuses abgestimmt, dass nur die jeweils maßgeblichen Adern des Flachkabels kontaktiert werden. Zur Kontaktierung der Adern eines Flachkabels mit zwei Aderebenen weisen die Kontaktvorrichtungen vorteilhafterweise einen Grundkörper mit ersten Kontakten auf Seiten des Gehäuses und einen gegen den Grundkörper verspannbaren Deckel mit zweiten Kontakten, welche über Leitungen zu dem Gehäuse hin elektrisch verbunden sind, auf der dem Leuchtengehäuse abgewandten Seite des Flachkabels auf. Der Deckel kann dabei auch auf der dem Gehäuse abgewandten Seite des Trägers liegen, wofür in dem Träger entsprechende Aussparungen vorgesehen sein können.

Die Leuchtengehäuse sind direkt oder über weitere mechanische Elemente indirekt an den langgestreckten Träger befestigt. Insbesondere kann eine gesonderte Befestigungsleiste vorgesehen sein, welche an dem Träger befestigt ist und an der wiederum die Leuchtengehäuse befestigt werden. Die Befestigung der Leuchtengehäuse kann dabei in beliebiger Längsposition oder in einem an der Befestigungsleiste vorbereiteten Raster ermöglicht sein, dessen Rasterweite vorzugsweise geringer ist als das in Längsrichtung kürzeste vorgesehene Leuchtengehäuse.

Das Flachkabel ist vorteilhafterweise an einer formstabilen Profilschiene gehalten und kann beispielsweise in einer solchen formschlüssig eingeklemmt und/oder aufgeklebt sein. Eine solche Profilschiene zur Halterung des Flachkabels kann in vorteilhafter Ausführung baulich mit einer Befestigungsschiene vereint sein. Insbesondere kann ein Profil, welches insbesondere als Strangpressprofil aus Kunststoff oder Aluminium ausgeführt sein kann, die Funktionen der Flachkabel-Halterung und der indirekten Befestigung der Leuchtengehäuse an einem Träger des Lastfahrzeugs in sich vereinen.

In anderer Ausführung ist das Flachkabel direkt an dem Träger befestigt, wobei der Träger eine Vertiefung für eine formschlüssige Aufnahme des Flachkabels aufweisen kann. Das Flachkabel kann auf der dem Leuchtengehäuse zugewandten Seite des Trägers oder mit Aussparungen für die Kontaktanordnungen auf der dem Gehäuse abgewandten Seite des Trägers angeordnet sein.

Die Kontaktanordnungen können in einer ersten Ausführung Bestandteil der Leuchtengehäuse und insbesondere starr mit diesen verbunden sein. Die mechanische Befestigung der Leuchtengehäuse an dem Träger bzw. der Befestigungsleiste kann dann vorteilhaft mit dem Kontaktierungsvorgang gekoppelt sein, so dass keine gesonderte Befestigung der Kontaktanordnung an dem Flachkabel erforderlich ist. In anderer Ausführung kann vorgesehen sein, dass die Kontaktanordnungen nicht starr mit den Leuchtengehäusen verbunden sind und unabhängig von der Befestigung der Leuchtengehäuse separat an dem Flachkabel befestigt werden. Der elektrische Anschluss der Leuchten erfolgt dann vorzugsweise über Verbindungskabel zwischen Kontaktanordnung und Leuchtengehäuse. In wieder anderer Ausführung können Adapter vorgesehen sein, welche einerseits Kontaktanordnungen zu dem Flachkabel aufweisen und direkt oder indirekt an dem Träger befestigt sind und andererseits Einrichtungen zur Befestigung von Leuchtengehäuse auf den Adaptern aufweisen. Hierdurch können auch Leuchtengehäuse, welche nicht für die Anordnung mit dem Flachkabel vorbereitet sind, insbesondere auch herkömmliche Leuchtengehäuse verwendet werden. Der elektrische Anschluss der Leuchten erfolgt über das Anschlusskabel der Leuchte, welches mit einem mehrpoligen Kabelanschluss des Adapters verbunden wird.

Der fahrzeugseitige Träger kann insbesondere auch eine Quertraverse gebräuchlicher Bauart sein, so dass die erfindungsgemäße Anordnung, insbesondere mittels eines in die Vertiefung der Quertraverse eingesetzten Profilschiene zur Halterung des Flachkabels und zur Befestigung der Leuchtengehäuse nachgerüstet werden kann.

Das Flachkabel kann sich in einer vorteilhaften Ausführung, insbesondere auch bei einer Quertraverse als Träger, im wesentlichen über die gesamte Fahrzeugbreite erstrecken. In anderer Ausführung, insbesondere bei Aufteilung der Heckleuchtenanordnung in zwei Teilanordnungen auf beiden Fahrzeugseiten, welche insbesondere auch auf den Radabdeckungen der hinteren Räder angeordnet sein können, kann die Länge der Flachkabel auf die für die Teilleuchtenanordnungen vorgesehenen Abschnitte begrenzt sein. Die Kennzeichenleuchte kann dann auch in anderer Weise angeschlossen sein.

Die Erfindung ist nachfolgend anhand bevorzugter Beispiele unter Bezugnahme auf die Abbildungen noch eingehend veranschaulicht. Dabei zeigt:
- Fig. 1: eine Zusammenbauzeichnung einer ersten Ausführung,
- Fig. 2: eine Ausführung mit Gehäuseadapter,
- Fig. 3: eine Rückansicht einer durchgehenden Heckleuchtenanordnung,
- Fig. 4: eine direkte Befestigung von Kabel und Gehäuse auf dem Träger,
- Fig. 5: eine Anordnung mit einer zweiteiligen Kontaktanordnung,
- Fig. 6: eine Anordnung mit einem modifizierten Kabel auf der dem Gehäuse abgewandten Seite des Trägers.

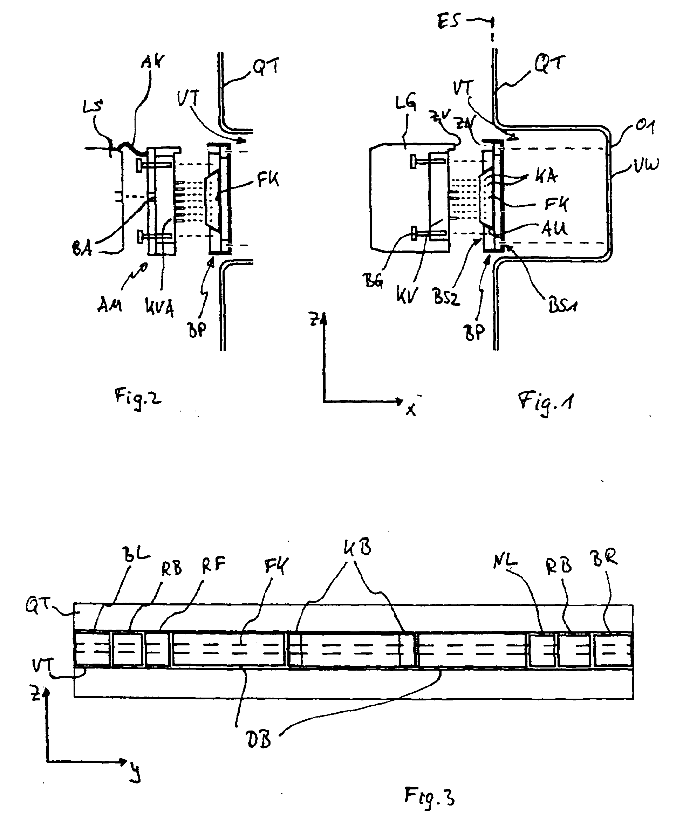

Bei der in Fig. 1 mit Blickrichtung (y-Richtung senkrecht zur Zeichenebene) horizontal und senkrecht zur Fahrtrichtung x skizzierten Anordnung sind wesentliche Bestandteile einer vorteilhaften Ausführung einer erfindungsgemäßen Heckleuchtenanordnung skizziert. Ausgegangen wird von einem fahrzeugseitigen Träger als z. B. einer an sich gebräuchlichen Quertraverse QT in Form eines mehrfach abgewinkelten Stahlblechs, welche gegenüber einer hinteren Schlussebene ES eine nach hinten offene Vertiefung VT in Fahrtrichtung x aufweist. Es ist an sich gebräuchlich, in dieser Vertiefung Leuchtengehäuse einer Heckleuchtenanordnung unterzubringen und über Anschlussleitungen mit einem heckseitigen Verteiler zu verbinden. Der Träger kann in anderer vorteilhafter Ausführung auch als Aluminium-Strangpressprofil oder als extrudiertes Kunststoffprofil ausgeführt sein.

Wesentlich an der vorliegenden Erfindung ist, dass in Längsrichtung y des Trägers ein Flachkabel FK mit einer Mehrzahl von Kabeladern KA verläuft, an welches mehrere Leuchtengehäuse LG mittels Kontaktanordnungen KV in der Weise anschließbar sind, dass in an sich bekannter Weise Kontaktspitzen oder Schneidklemmen der Kontaktanordnung in definierter, der vertikalen (y) Positionsverteilung der Kabeladern im Flachkabel entsprechender Position durch die Isolierung des Flachkabels eingedrückt werden und die einzelnen Kabeladern KA dabei kontaktieren. Kontakte der Kontaktanordnung sind innerhalb des Leuchtengehäuses zu den dort vorliegenden Leuchtmitteln weiter verbunden. Das Flachkabel FK weist im skizzierten Beispiel sieben Adern entsprechend einer für alle Leuchtenstromkreise gemeinsamen Masseader und sechs Funktionsadern zu den Stromkreisen der jeweils funktional unabhängigen Beleuchtungsfunktionen auf. Die Kontaktanordnung KV besitzt im skizzierten Beispiel lediglich drei Kontakte, wodurch beispielsweise in ein und demselben Leuchtengehäuse zwei unterschiedliche Beleuchtungsfunktionen, beispielsweise Rücklicht und Bremsleuchte vorliegen und zwei unabhängige Stromkreise mit einer gemeinsamen Masseleitung und zwei separaten Funktionsleitungen versorgt werden können. Die Position der übrigen, bei anderen Leuchtenfunktionen vorzusehenden Kontakte der Kontaktanordnung KV sind durch die unterbrochenen Ausrichtungslinien angedeutet.

Das Flachkabel FK ist im skizzierten Beispiel mit trapezförmigem Querschnitt in eine Kabelaufnahme AU einer Befestigungsleiste BP leicht klemmend eingefügt oder auch eingeklebt. Die Befestigungsleiste kann insbesondere als Strangpressprofil aus Kunststoff oder Aluminium ausgeführt sein. Durch die Kabelaufnahme AU befindet sich das Flachkabel FK in definierter Position bezüglich der Befestigungsleiste BP. Vorteilhafterweise können an Befestigungsleiste und Leuchtengehäuse korrespondierende Strukturen und Gegenstrukturen zur definierten Ausrichtung des Leuchtengehäuses in z-Richtung, d. h. quer zur Längsrichtung des Flachkabels vorgesehen sein, welche im skizzierten Beispiel als Zentriernut ZN in der Befestigungsleiste und als Zentriervorsprung ZV am Leuchtengehäuse ausgeführt sind. Eine Zentrierung kann auch über eine entsprechende Form des Flachkabels, welches dann vorteilhafterweise über die Befestigungsleiste in Richtung des Leuchtengehäuses vorsteht, und eine entsprechende Formaussparung in der Kontaktanordnung KV erfolgen.

Bei metallischer Befestigungsleiste BP ist durch entsprechende Bemessungen sicher zu stellen, dass die Kontakte der Kontaktanordnung KV nicht durch das gesamte Flachkabel FK hindurch bis zur metallischen Rückwand gelangen und dort Kurzschlüsse verursachen.

Die Befestigungsleiste BP weist zusätzlich erste Befestigungsstrukturen BS1, beispielsweise Bohrungen oder hinterschnittene Nuten oder auch nur Wandungen, welche durch selbstbohrende und selbstschneidende Schrauben durchdrungen werden können zur Befestigung der Befestigungsleiste BP an der Wand VW der Vertiefung VT in der Quertraverse QT auf. Korrespondierende Öffnungen O1 können in der Wand VW der Vertiefung VT der Quertraverse QT vorgesehen sein. Die ersten Befestigungsstrukturen an der Befestigungsleiste BP sind vorteilhafterweise in Längsrichtung y der Befestigungsleiste durchgehend vorhanden, insbesondere in Form von hinterschnittenen Nuten, in welche Schraubenköpfe oder Muttern längsverschiebbar eingesetzt werden können.

An zweiten Befestigungsstrukturen BS2 der Befestigungsleiste BP werden Leuchtengehäuse LG über Befestigungselemente BG befestigt, wobei mit der Befestigung der Leuchtengehäuse auf der Befestigungsleiste zugleich der elektrische Anschluss zwischen den Kontakten der Kontaktanordnung KV und den jeweiligen Kabeladern hergestellt wird. Das Flachkabel FK ist dabei an der Rückwand der Kabelaufnahme AU abgestützt. Die zweiten Befestigungsvorrichtungen können beispielsweise einfach durchgehende Profilwandungen der Befestigungsleiste BP sein, in welche selbstbohrende und schneidende Schrauben als Befestigungselemente BG eingedreht werden. In anderer Ausführung können die zweiten Befestigungsvorrichtungen auch Schnapp- oder Rastverbindungen enthalten.

Die relativen Ausrichtungen von Befestigungsstrukturen zwischen Befestigungsleiste BP und Quertraverse QT einerseits und Leuchtengehäuse LG andererseits sind jeweils durch unterbrochene Linien angedeutet.

In Fig. 2 ist eine alternative Ausführungsform skizziert, bei welcher die Kontaktanordnungen KVA nicht fest mit Leuchtengehäusen verbunden sind. Die Kontaktanordnungen sind in diesem Fall an Adaptermodulen AM vorgesehen, welche auf der Befestigungsschiene BP befestigt werden und ihrerseits Befestigungsvorrichtungen BA zur Befestigung von Leuchtengehäusen LS aufweisen. Der elektrische Anschluss der Leuchten in den Leuchtengehäusen LS erfolgt über elektrische Anschlussleitungen, welche mit den jeweils benötigten Kontakten des Adaptermoduls verbunden sind. Um die Adaptermodule für Leuchtengehäuse LS unterschiedlicher Funktion einheitlich verwenden zu können, weisen die Kontaktanordnungen KVA der Adaptermodule einen vollständigen Kontaktsatz zur Kontaktierung aller Adern des Flachkabels FK auf. Für die jeweils benötigte Beleuchtungsfunktion werden dann lediglich die zugehörigen Kontakte der Kontaktanordnung KVA mit den Leitungen des Anschlusskabels AK verbunden.

In vorteilhafter Ausführung können die Kontaktanordnungen zu einem Leuchtengehäuse bzw. einem Adapter zwei in Längsrichtung y beabstandete gleiche Kontaktreihen enthalten, deren entsprechende Kontakte intern miteinander verbunden sind. Hierdurch kann u. U. die Zuverlässigkeit der Kontaktierung der Kabeladern verbessert werden.

In Fig. 3 ist mit Blickrichtung in Fahrtrichtung des Fahrzeugs eine Heckleuchtenanordnung in einer Vertiefung VT einer Quertraverse QT skizziert, wobei mit unterbrochener Linie das über im wesentlichen die gesamte Fahrzeugbreite durchgehende Flachkabel FK angedeutet ist. Die Heckleuchtenanordnung enthält mehrere Leuchtengehäuse, insbesondere separate Leuchtengehäuse für Blinker links BL, für Blinker rechts BR, für Rücklicht und Bremslicht RB beidseitig, für Rückfahrscheinwerfer RF und für Nebelschlussleuchte NL sowie für Kennzeichenbeleuchtung KB, welche jeweils separat an der Quertraverse oder einer an dieser befestigten Befestigungsleiste entsprechend BP nach Fig. 1 oder einem Adaptermodul nach Fig. 2 gehalten sind und mittels die Isolierung des Flachkabels durchdringender Kontaktanordnungen mit den für die jeweilige Beleuchtungsfunktion zugeordneten Adern des Flachkabels kontaktiert sind. Größere Lücken zwischen einzelnen Leuchtengehäusen, insbesondere zwischen der mittig angeordneten Kennzeichenbeleuchtung KB und den Enden der Quertraverse zugewandt angeordneten übrigen Leuchtengehäusen können durch optisch passive Blenden DB, welche auch Reflektoren enthalten oder bedruckt sein können, abgedeckt werden, wodurch das Flachkabel in diesen Bereichen zusätzlich geschützt ist.

In Fig. 4 ist eine zusammen gesetzte Heckleuchtenanordnung mit Blickrichtung in y-Richtung skizziert, bei welcher der Träger als Strangpressprofil SP aus Aluminium ausgeführt sei. In der dem Leuchtengehäuse LG4 zugewandten Wand GW des Profils ist eine Vertiefung vorgesehen, in welcher das Flachkabel FK einliegt. Das Kabel kann durch Randvorsprünge der Vertiefung mechanisch gehalten oder in die Vertiefung eingeklebt sein. Das Leuchtengehäuse LG4 ist direkt auf dem Träger befestigt. Eine Kontaktanordnung KV4 an der dem Kabel zugewandten Seite des Leuchtengehäuses kontaktiert in zu Fig. 1 oder Fig. 2 beschriebener Weise die relevanten oder alle Kabeladern des Flachkabels.

In Fig. 5 ist eine Heckleuchtenanordnung skizziert, bei welcher die Kontaktanordnung einen Grundkörper GK und einen Deckel DE enthält, welche unter klemmendem Einschluss des Flachkabels in x-Richtung gegeneinander verspannbar sind. Der Grundkörper GK ist auf der dem Leuchtengehäuse LG5 zugewandten und der Deckel DE auf der dem Leuchtengehäuse abgewandten Seite des Flachkabels angeordnet. Die vergrößerte Bautiefe in x-Richtung wird in dem Träger dadurch berücksichtigt, dass in der Trägerwand GW5 des Trägers QT5 eine Öffnung AU vorgesehen ist, durch welche zumindest der Deckel der zusammengesetzten Kontaktanordnung hindurch ragt. Die Verspannung zwischen Grundkörper GK und Deckel DE kann zugleich zur Befestigung des Leuchtengehäuses an dem Träger dienen, wenn der Deckel auf der dem Leuchtengehäuse abgewandten Seite der Trägerwand über die Ränder der Aussparung hinaus ragt. In der Trägerwand GW kann eine Vertiefung GV zur formschlüssigen Aufnahme des Flachkabels vorgesehen sein.

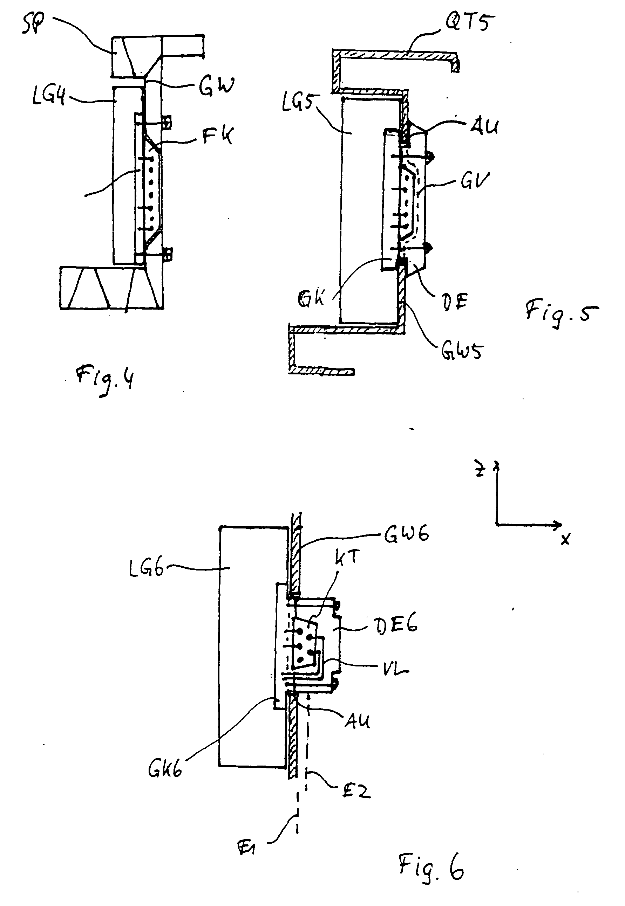

In Fig. 6 ist eine weitere Ausführungsform skizziert, in welcher die Kontaktanordnung aus einem Grundkörper GK6 und einem Deckel DE6 besteht, zwischen welchen das Flachkabel eingeklemmt ist. Das Flachkabel KT weist in diesem Beispiel die Kabeladern in zwei in x-Richtung voneinander beabstandeten Adernebenen E1 und E2 auf. Adern der Adernebene E1 werden über Kontakte im Grundkörper GK6, Adern in der Adernebene E2 über Kontakte im Deckel DE6 kontaktiert. Von den Kontakten im Deckel DE6 führen elektrische Verbindungsleitungen VL, welche Steckverbindungen oder flexible Kabelabschnitte enthalten können, zu dem Leuchtengehäuse LG6. Das Flachkabel KT verlaufe in dieser Ausführung außerhalb der Wandaussparung AU auf der dem Leuchtengehäuse abgewandten Seite der Wand GW6 des Trägers QT.

## Patentansprüche

1. Heckleuchtenanordnung an einem Fahrzeug, insbesondere einem Lastfahrzeug mit einem quer zur Fahrtrichtung verlaufenden Träger und mehreren in Längsrichtung des Trägers beabstandeten Einzelleuchten in jeweils eigenen Leuchtengehäusen sowie einer Kabelanordnung zur elektrischen Versorgung der Einzelleuchten, **dadurch gekennzeichnet, dass** die Kabelanordnung ein Flachkabel enthält, welches sich parallel zur Längsrichtung des Trägers erstreckt und über seine gesamte Länge isolierte Kabeladern für wenigstens zwei unterschiedliche Beleuchtungsfunktionen enthält und dass wenigstens zwei getrennte Leuchtengehäuse mittels die Isolierung durchdringender Kontaktanordnungen ohne Unterbrechung von Kabeladern mit Kabeladern kontaktiert und an dem Träger befestigt sind.

2. Anordnung nach Anspruch 1, **dadurch gekennzeichnet, dass** das Flachkabel an einer formstabilen Profilschiene gehalten ist.

3. Anordnung nach Anspruch 1 oder 2, **dadurch gekennzeichnet, dass** eine Befestigungsleiste zur Befestigung der Leuchtengehäuse parallel zum Flachkabel verläuft.

4. Anordnung nach Anspruch 2 oder 3, **dadurch gekennzeichnet, dass** Profilschiene und Befestigungsleiste eine bauliche Einheit bilden.

5. Anordnung nach Anspruch 3 oder 4, **dadurch gekennzeichnet, dass** die Befestigungsleiste in Längsrichtung durchgehende Befestigungsvorrichtungen zur Verbindung mit Leuchtengehäusen und/oder mit dem Träger aufweist.

6. Anordnung nach einem der Ansprüche 3 bis 5, **dadurch gekennzeichnet, dass** die Befestigungsleiste auf dem Träger befestigt ist.

7. Anordnung nach Anspruch 1, **dadurch gekennzeichnet, dass** Flachkabel und Gehäuse unmittelbar auf dem Träger befestigt sind.

8. Anordnung nach einem der Ansprüche 1 bis 7, **dadurch gekennzeichnet, dass** der Träger durch eine Quertraverse am Heck des Fahrzeugs gebildet ist.

9. Anordnung nach Anspruch 1 bis 7, **dadurch gekennzeichnet, dass** das Flachkabel im wesentlichen über die gesamte Fahrzeugbreite verläuft.

10. Anordnung nach einem der Ansprüche 1 bis 9, **dadurch gekennzeichnet, dass** der Träger über einer hinteren Radabdeckung angeordnet ist.

11. Anordnung nach einem der Ansprüche 1 bis 10, **dadurch gekennzeichnet, dass** die Kontaktanordnungen fest mit dem Leuchtengehäuse verbunden sind.

12. Anordnung nach Anspruch 11, **dadurch gekennzeichnet, dass** die Kontaktanordnungen zugleich zur Befestigung der Leuchtengehäuse auf dem Träger oder der Befestigungsleiste dienen.

13. Anordnung nach Anspruch 11 oder 12, **dadurch gekennzeichnet, dass** die Kontaktanordnungen über flexible Leitungen mit den Leuchtengehäusen verbunden sind.

14. Anordnung nach einem der Ansprüche 1 bis 13, **dadurch gekennzeichnet, dass** eine Kontaktanordnung einen Grundkörper auf der dem Gehäuse zugewandten und einen mit dem Grundkörper lösbar verbundenen Deckel auf der dem Gehäuse abgewandten Seite des Flachkabels enthält und das Kabel zwischen Grundkörper und Deckel eingeklemmt ist.

15. Anordnung nach Anspruch 14, **dadurch gekennzeichnet, dass** im Deckel Kontakte zur Kontaktierung von Kabeladern vorgesehen sind und elektrische Verbindungen von diesen Kontakten zum Leuchtengehäuse führen.

16. Anordnung nach Anspruch 14, **dadurch gekennzeichnet, dass** die Kabeladern des Flachkabels in zwei Ebenen angeordnet sind.

17. Anordnung nach einem der Ansprüche 1 bis 16, **dadurch gekennzeichnet, dass** Adaptermodule vorgesehen sind, welche die Kontaktanordnungen aufweisen und auf dem Träger bzw. der Befestigungsleiste befestigbar sind und ihrerseits Befestigungsvorrichtungen und Kabelanschlussvorrichtungen für Leuchtengehäuse enthalten.

18. Anordnung nach einem der Ansprüche 1 bis 17, **dadurch gekennzeichnet, dass** mehrere getrennte Leuchtengehäuse zu wenigstens zwei unterschiedlichen Beleuchtungsfunktionen an ein gemeinsames Flachkabel angeschlossen sind.

19. Anordnung nach einem der Ansprüche 1 bis 18, **dadurch gekennzeichnet, dass** das Flachkabel wenigstens fünf getrennte Kabeladern aufweist.

## Claims

1. Rear lamp arrangement on a vehicle, in particular a heavy goods vehicle, having a support which runs transverse to the direction of travel and a plurality of individual lamps, which are spaced apart in the longitudinal direction of the support, in dedicated lamp housings in each case, and also a cable arrangement for supplying electrical power to the individual lamps, **characterized in that** the cable arrangement contains a flat cable which extends parallel to the longitudinal direction of the support and contains insulated cable cores for at least two different lighting functions over its entire length, and **in that** cable cores make contact with at least two separate lamp housings by means of contact arrangements which penetrate the insulation without interrupting cable cores, and the said at least two separate lamp housings are fixed to the support.

2. Arrangement according to Claim 1, **characterized in that** the flat cable is held on a dimensionally stable profile rail.

3. Arrangement according to Claim 1 or 2, **characterized in that** a fixing strip for fixing the lamp housing runs parallel to the flat cable.

4. Arrangement according to Claim 2 or 3, **characterized in that** the profile rail and fixing strip form one physical unit.

5. Arrangement according to Claim 3 or 4, **characterized in that** the fixing strip has fixing apparatuses, which are continuous in the longitudinal direction, for connection to lamp housings and/or to the support.

6. Arrangement according to one of Claims 3 to 5, **characterized in that** the fixing strip is fixed to the support.

7. Arrangement according to Claim 1, **characterized in that** the flat cable and housing are fixed directly to the support.

8. Arrangement according to one of Claims 1 to 7, **characterized in that** the support is formed by a crosspiece on the rear of the vehicle.

9. Arrangement according to Claims 1 to 7, **characterized in that** the flat cable runs substantially over the entire vehicle width.

10. Arrangement according to one of Claims 1 to 9, **characterized in that** the support is arranged over a rear wheel covering.

11. Arrangement according to one of Claims 1 to 10, **characterized in that** the contact arrangements are firmly connected to the lamp housing.

12. Arrangement according to Claim 11, **characterized in that** the contact arrangements simultaneously serve to fix the lamp housing to the support or to the fixing strip.

13. Arrangement according to Claim 11 or 12, **characterized in that** the contact arrangements are connected to the lamp housings via flexible lines.

14. Arrangement according to one of Claims 1 to 13, **characterized in that** a contact arrangement contains a base body on that side of the flat cable which faces the housing, and a cover, which is releasably connected to the base body, on that side of the flat cable which faces away from the housing, and the cable is clamped between the base body and cover.

15. Arrangement according to Claim 14, **characterized in that** contacts for making contact with cable cores are provided in the cover, and electrical connections lead from these contacts to the lamp housing.

16. Arrangement according to Claim 14, **characterized in that** the cable cores of the flat cable are arranged in two planes.

17. Arrangement according to one of Claims 1 to 16, **characterized in that** adapter modules are provided which have the contact arrangements and can be fixed to the support or the fixing strip and for their part contain fixing apparatuses and cable connection apparatuses for the lamp housing.

18. Arrangement according to one of Claims 1 to 17, **characterized in that** a plurality of separate lamp housings for at least two different lighting functions are connected to a common flat cable.

19. Arrangement according to one of Claims 1 to 18, **characterized in that** the flat cable has at least five separate cable cores.

## Revendications

1. Ensemble de feux arrière sur un véhicule, en particulier un camion comportant une poutre orientée transversalement à la direction de circulation et plusieurs feux individuels espacés dans la direction longitudinale de la poutre, placés chacun dans leur boîtier de feu propre, ainsi qu'un système de câblage pour l'alimentation électrique des feux individuels, **caractérisé en ce que** le système de câblage comprend un câble plat, qui s'étend parallèlement à la direction longitudinale de la poutre et qui contient des brins de câble isolés sur toute sa longueur pour au moins deux fonctions d'éclairage différentes, et **en ce qu'**au moins deux boîtiers de feux séparés sont en contact avec des brins de câble au moyen de dispositifs de contact traversant l'isolant sans interruption de brins de câble et sont fixés à la poutre.

2. Ensemble selon la revendication 1, **caractérisé en ce que** le câble plat est tenu sur un rail profilé de forme stable.

3. Ensemble selon la revendication 1 ou 2, **caractérisé en ce qu'**une latte de fixation est placée parallèlement au câble plat pour la fixation des boîtiers de feux.

4. Ensemble selon la revendication 2 ou 3, **caractérisé en ce que** le rail profilé et la latte de fixation forment une unité structurelle.

5. Ensemble selon la revendication 3 ou 4, **caractérisé en ce que** la latte de fixation comprend des dispositifs de fixation continus dans la direction longitudinale pour l'assemblage avec des boîtiers de feux et/ou avec la poutre.

6. Ensemble selon l'une quelconque des revendications 3 à 5, **caractérisé en ce que** la latte de fixation est fixée sur la poutre.

7. Ensemble selon la revendication 1, **caractérisé en ce que** le câble plat et les boîtiers sont fixés directement sur la poutre.

8. Ensemble selon l'une quelconque des revendications 1 à 7, **caractérisé en ce que** la poutre est formée par une traverse transversale à l'arrière du véhicule.

9. Ensemble selon l'une quelconque des revendications 1 à 7, **caractérisé en ce que** le câble plat s'étend essentiellement sur toute la largeur du véhicule.

10. Ensemble selon l'une quelconque des revendications 1 à 9, **caractérisé en ce que** la poutre est disposée au-dessus d'un garde-boue arrière.

11. Ensemble selon l'une quelconque des revendications 1 à 10, **caractérisé en ce que** les dispositifs de contact sont assemblés fixement au boîtier de feu.

12. Ensemble selon la revendication 11, **caractérisé en ce que** les dispositifs de contact servent également pour la fixation des boîtiers de feux sur la poutre ou sur la latte de fixation.

13. Ensemble selon la revendication 11 ou 12, **caractérisé en ce que** les dispositifs de contact sont raccordés aux boîtiers de feux par des conducteurs flexibles.

14. Ensemble selon l'une quelconque des revendications 1 à 13, **caractérisé en ce qu'**un dispositif de contact comporte un corps de base sur le côté du câble plat tourné vers le boîtier et un couvercle assemblé de manière amovible au corps de base sur le côté du câble plat à l'opposé du boîtier, et le câble est serré entre le corps de base et le couvercle.

15. Ensemble selon la revendication 14, **caractérisé en ce qu'**il est prévu dans le couvercle des contacts permettant d'établir le contact avec des brins de câble et des liaisons électriques conduisent de ces contacts au boîtier de feu.

16. Ensemble selon la revendication 14, **caractérisé en ce que** les brins de câble du câble plat sont disposés dans deux plans.

17. Ensemble selon l'une quelconque des revendications 1 à 16, **caractérisé en ce qu'**il est prévu des modules d'adaptateur, qui contiennent les ensembles de contact et qui peuvent être fixés sur la poutre ou sur la latte de fixation, et qui comportent à leur tour des dispositifs de fixation et des dispositifs de raccordement de câbles pour des boîtiers de feux.

18. Ensemble selon l'une quelconque des revendications 1 à 17, **caractérisé en ce que** plusieurs boîtiers de feux séparés sont raccordés à un câble plat commun pour au moins deux fonctions d'éclairage différentes.

19. Ensemble selon l'une quelconque des revendications 1 à 18, **caractérisé en ce que** le câble plat comprend au moins cinq brins de câble séparés.
